# FASCICULE DE BREVET EUROPEEN

(11) **EP 4 551 892 B1**
(45) Date de publication et mention de la délivrance du brevet: **07.10.2026**
(21) Numéro de dépôt: 23755122.1
(22) Date de dépôt: 29.06.2023
(51) Int. Cl.: F28D 9/00, F28F 3/02, F28D 21/00

(54) **ECHANGEUR DE CHALEUR A AILETTES DE LONGUEUR VARIABLE ET TURBOMACHINE CORRESPONDANTE**
WÄRMETAUSCHER MIT RIPPEN VON UNTERSCHIEDLICHER LÄNGE UND KORRESPONDIERENDE TURBOMASCHINE
HEAT EXCHANGER WITH FINS HAVING VARIABLE LENGTH AND CORRESPONDING TURBOMACHINE

(30) Priorité: 08.07.2022 FR 2207031
(43) Date de publication de la demande: 14.05.2025
(73) Titulaire: SAFRAN, 75015 Paris (FR)
(72) Inventeur: TOUBIANA, Ephraïm, 77550 Moissy-Cramayel (FR)
(74) Mandataire: Gevers & Orès
(86) Numéro de dépôt international: PCT/FR2023/050996
(87) Numéro de publication internationale: WO 2024/009025

(56) Documents cités:
- EP-A1- 4 070 957
- FR-A1- 3 097 257
- US-A- 2 429 508
- US-A- 2 792 200
- US-A- 3 818 984
- US-A- 4 574 872
- US-A1- 2012 216 543
- US-A1- 2016 054 071
- US-A1- 2021 180 886
- US-A1- 2021 222 963
- US-B2- 10 866 030
- US-B2- 8 601 791

## Description

### Domaine de l'invention

La présente invention concerne le domaine général de l'aéronautique. Elle vise en particulier un échangeur de chaleur pour une turbomachine, notamment d'aéronef.

### Arrière-plan technique

Une turbomachine d'aéronef et un aéronef comprennent divers organes et/ou équipements devant être lubrifiés et/ou refroidis pour leur bon fonctionnement ou des fluides devant être refroidis pour le bon fonctionnement de la turbomachine. Ces organes et/ou équipement et/ou fluides peuvent être des moyens de guidage de rotor dans la turbomachine, des composants électriques et/ou électroniques pour des systèmes électriques de la turbomachine de l'aéronef, des gaz chaud d'échappement de la turbomachine destinés à être introduits en amont de la chambre de combustion, ou encore des systèmes de conditionnement des espaces intérieurs de l'aéronef. La chaleur dégagée par ces organes, équipements et/ou fluides, qui peut être très importante, est évacuée par échange thermique dans la turbomachine et/ou l'aéronef.

L'échange thermique est réalisé grâce à un ou plusieurs échangeurs de chaleur qui sont installés dans la turbomachine ou dans l'aéronef et pour diverses applications. Selon les applications, les échangeurs de chaleur utilisent de manière générale une source froide pouvant être de l'air ambiant, un air de la veine secondaire de la turbomachine, etc. et une source chaude pouvant être le carburant de la turbomachine, de l'huile, de l'air (*bleed air*) prélevé au niveau du compresseur basse pression ou haute pression de la turbomachine, ou un air de la veine primaire de la turbomachine.

Les échangeurs de chaleur peuvent être du type à tubes, à ailettes, à plaque et ailettes, etc. Les échangeurs à plaques et ailettes, et notamment ceux à pas décalés connus sous l'expression anglaise « *offset strip fins*» sont employés dans les turbomachines du fait de leur faible masse. Ces échangeurs de chaleur comprennent des rangées d'ailettes parallèles entre elles et des ailettes qui sont disposées en quinconce ou à pas décalés. L'échangeur de chaleur peut être configuré en plusieurs étages. De manière générale, un premier fluide par exemple, des gaz chauds d'échappement, et un deuxième fluide, par exemple, un flux d'air circulant dans la turbomachine, traversent l'échangeur de chaleur suivant deux directions différentes. Un exemple d'échangeur de chaleur à plaques et ailettes est décrit dans le document de brevet FR3077630.

L'art antérieur comprend également les documents suivants, US-A-3818984, qui décrit un échangeur de chaleur selon le préambule de la revendication 1, US-A-2792200, US-A1-2021/0180886, US-B2-10866030, US-A1-2016/0054071, US-A1-2021/0222963, US-A1-2012/0216543, FR-A1-3097257, US-A-2429508, et US-B2-8601791.

L'une des problématiques observées dans ce type d'échangeur de chaleur appliqué dans une turbomachine est l'importante perte de charge, en particulier due à une trainée de forme importante. Il est difficile d'augmenter le nombre d'ailettes de manière significative pour améliorer les performances de la turbomachine. Par ailleurs, un échangeur de chaleur de ce type, notamment avec plusieurs étages, présente des différences de vitesse de circulation des flux entre l'entrée et la sortie de l'échangeur de chaleur. En effet, la section de passage de fluide peut augmenter suivant la direction de circulation du fluide dans l'échangeur de chaleur. Cela entraine une réduction de la vitesse et une augmentation approximativement linéaire du diamètre hydraulique de la surface d'échange. Par conséquent, le coefficient d'échange va diminuer et le coefficient d'échange global va varier en fonction de la distance avec l'entrée de l'échangeur de chaleur, ce qui entraine une hétérogénéité de l'échange thermique et un déséquilibre au niveau des résistances thermiques de convection entre les premier et deuxième fluides. L'échangeur est généralement dimensionné de façon à avoir un rapport des résistances thermiques de convection optimal. Le rapport des résistances thermiques optimal dépend de la nature des deux fluides, températures/pressions/débits et perte de charge autorisée pour chacun des fluides. Celui-ci peut être proche de 1 si les fluides sont de même nature avec des conditions de températures/pressions/débits relativement proche et de pertes de charge visée proche.

Il existe un besoin de résoudre tout ou partie des inconvénients précités.

### Résumé de l'invention

L'objectif de la présente invention est de fournir un échangeur de chaleur permettant une meilleure optimisation des performances aérothermiques tout en réduisant les pertes de charge et en évitant d'impacter la masse considérablement.

Nous parvenons à cet objectif conformément à l'invention grâce à un échangeur de chaleur pour une turbomachine, notamment d'aéronef, d'axe longitudinal, l'échangeur de chaleur comprenant une pluralité d'ailettes destinées à être balayées par un premier fluide suivant une première direction, les ailettes s'étendant suivant une deuxième direction entre un premier panneau et un deuxième panneau, les ailettes étant disposées en plusieurs rangées suivant une troisième direction et étant disposées en quinconce, chaque rangée d'ailettes étant parallèles les unes autres et connectées les unes aux autres, l'échangeur de chaleur étant annulaire centré sur l'axe longitudinal et présentant une surface cylindrique externe définissant une entrée de l'échangeur de chaleur et une surface cylindrique externe définissant une sortie de l'échangeur de chaleur, et les ailettes successives de chaque rangée présentant une longueur qui décroit radialement dans l'échangeur de chaleur, suivant la première direction, entre la surface cylindrique interne et la surface cylindrique externe.

Ainsi, cette solution permet d'atteindre l'objectif susmentionné. En particulier, en adaptant les dimensions et caractéristiques des surfaces d'échange sur le premier fluide en fonction de la distance avec l'axe central de l'échangeur, les performances thermiques de l'échangeur de chaleur sont significativement améliorées. Avec cette configuration, le coefficient d'échange global augmente et est relativement homogène sur toute la longueur radiale de l'échangeur de chaleur en intervenant sur un coefficient d'échange variable sur la longueur radiale du côté du premier fluide. La variation de la longueur des ailettes permet par ailleurs de compenser la variation de section et une variation de vitesse de l'écoulement du premier fluide dans l'échangeur de chaleur. La section de passage augmente avec le rayon de l'échangeur de chaleur (en coordonnées cylindriques) d'où une diminution de la vitesse. La réduction de la longueur d'ailette va augmenter le coefficient d'échange à iso-vitesse. La réduction de vitesse est compensée par la réduction de longueur d'ailette.

L'échangeur de chaleur comprend également l'une ou plusieurs des caractéristiques suivantes, prises seules ou en combinaison :
- les ailettes de chaque rangée sont espacées d'un pas suivant la première direction, le pas présentant une variation suivant la deuxième direction.
- le pas décroit suivant la première direction de la surface cylindrique interne vers la surface cylindrique externe.
- chaque ailette présente une hauteur qui croit depuis la surface cylindrique interne à la surface cylindrique externe.
- le premier panneau, le deuxième panneau et les ailettes entre les premier et deuxième panneaux forment un étage et en ce que l'échangeur de chaleur comprend plusieurs étages disposés autour de la troisième direction, les étages étant espacés par des passages destinés à la circulation d'un deuxième fluide.
- l'échangeur de chaleur comprend des couvercles obturant chacun une extrémité d'un passage, les couvercles s'étendant entre le premier panneau et le deuxième panneau.
- les ailettes sont reliées alternativement par des parois de sommet et des parois de base, les parois de sommet et les parois de base étant reliées respectivement aux premier et deuxième panneaux.
- l'échangeur de chaleur est réalisé en une seule pièce (venue de matière).
- la longueur de chaque ailette est définie de manière linéaire en fonction de la coordonnée radiale moyenne de l'ailette et suivant un paramètre ${λ}_{r} = \frac{L \left({R}_{min}\right)}{L \left({R}_{max}\right)}$, où L est la longueur de l'ailette en fonction de sa position radiale en coordonnées cylindriques, Rmin est le rayon minimum de l'échangeur de chaleur définie par la surface cylindrique interne, Rmax est le rayon maximum de l'échangeur de chaleur définie par la surface cylindrique externe.
- l'échangeur de chaleur comprend une entrée définie dans la surface cylindrique interne par laquelle le premier fluide et/ou le deuxième fluide entre(nt) dans l'échangeur de chaleur et une sortie définie dans la surface cylindrique externe par laquelle le premier fluide et/ou le deuxième fluide s'évacue(nt) de l'échangeur de chaleur.
- l'échangeur de chaleur comprend une entrée définie dans une surface amont dans laquelle le deuxième fluide entre dans l'échangeur de chaleur et une sortie définie dans une surface aval opposée suivant l'axe longitudinal par laquelle le deuxième fluide s'évacue de l'échangeur de chaleur.

L'invention concerne également une turbomachine comprenant un échangeur de chaleur présentant l'une quelconque des caractéristiques précédentes, les premier et deuxième panneaux s'étendant d'une part, suivant un axe radial perpendiculaire à l'axe longitudinal X et étant d'autre part, disposés régulièrement autour de l'axe longitudinal, les ailettes étant disposées entre les premier et deuxième panneaux, la première direction étant parallèle à l'axe radial.

L'invention concerne en outre un aéronef comprenant une turbomachine telle que susmentionnée.

L'invention concerne enfin un procédé de fabrication d'un échangeur de chaleur tel que susmentionné, le procédé comprend une étape de réalisation de l'échangeur de chaleur par fabrication additive par fusion sélective sur lits de poudre.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue en perspective d'un échangeur de chaleur comprenant des plaques et des ailettes selon l'invention ;
La figure 2 est une vue en coupe axiale d'un exemple de turbomachine à laquelle s'applique l'invention;
La figure 3 est une vue schématique et en coupe transversale d'un échangeur de chaleur selon l'invention ;
La figure 4 est une vue en perspective d'un exemple d'agencement d'ailettes d'un échangeur de chaleur selon l'invention ;
La figure 5 est une vue en coupe radiale de l'échangeur de chaleur de la figure 1 selon l'invention ; et
La figure 6 est une vue de côté montrant la périphérie externe de l'échangeur de chaleur selon l'invention.

### Description détaillée de l'invention

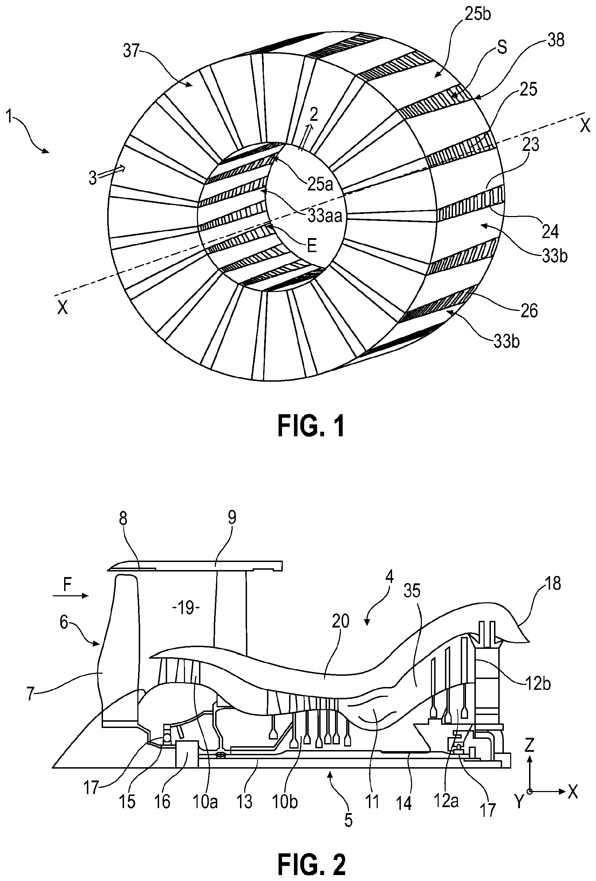

La figure 1 représente un échangeur de chaleur 1 qui permet un transfert d'énergie thermique entre un premier fluide 2 et un deuxième fluide 3. L'échangeur de chaleur 1 est destiné à être monté dans une turbomachine 4 d'aéronef. Bien entendu, l'échangeur de chaleur 1 peut être installé dans n'importe quel système dans lequel un transfert d'énergie thermique est nécessaire.

Sur la figure 2 est représentée, suivant une vue en coupe axiale, une turbomachine 4 double flux d'axe longitudinal X à laquelle peut s'appliquer l'invention. Bien entendu, d'autres types de turbomachine sont envisagés.

La turbomachine 4 double flux comprend, de manière générale, un générateur de gaz ou moteur à turbine à gaz 5 en amont duquel est montée une soufflante ou module de soufflante 6. Dans la présente invention, les termes « amont » et « aval » sont définis par rapport à la circulation des gaz dans la turbomachine et ici suivant l'axe longitudinal X et en référence à la figure 2 de gauche à droite. La soufflante 6 comprend des aubes 7 qui sont carénées par un carter de soufflante 8. Le carter de soufflante 8 porte une nacelle 9. Cette dernière est annulaire, centrée sur l'axe longitudinal X et reliée à l'aéronef.

Le générateur de gaz 5 comprend, d'amont en aval, un compresseur basse pression 10a, un compresseur haute pression 10b, une chambre annulaire de combustion 11, et une turbine haute pression 12a et une turbine basse pression 12b. Classiquement, la turbomachine 1 comprend un arbre basse pression 13 qui relie le compresseur basse pression 10a et la turbine basse pression 12a pour former un corps basse pression et un arbre haute pression 14 qui relie le compresseur haute pression 10b et la turbine haute pression 13a pour former un corps haute pression.

L'arbre basse pression 13, centré sur l'axe longitudinal, entraîne ici un arbre de soufflante 15. Un réducteur de vitesse 16 peut être interposé, comme ici, entre l'arbre de soufflante 15 et l'arbre basse pression 13. De manière avantageuse, des paliers de guidage 17 en rotation permettent également de guider en rotation l'arbre basse pression 13, l'arbre haute pression 14 et l'arbre de soufflante 15 par rapport à une structure fixe de la turbomachine.

Les paliers de guidage 17 et le réducteur de vitesse 16 dans cet exemple de configuration de la turbomachine 1 doivent être lubrifiés et/ ou refroidis pour assurer la performance de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. D'autres équipements de la turbomachine ou de l'aéronef tels que des machines électriques, génératrices, batteries, un boîtier d'accessoires, des systèmes électroniques/électriques, des systèmes de refroidissement des espaces intérieurs de l'aéronef, peuvent avoir une énergie thermique importante à transférer.

L'échangeur de chaleur 1 est décrit ci-après plus en détail dans le contexte de son installation dans une turbomachine et permet dans cet exemple de refroidir le premier fluide 2 par le deuxième fluide 3. Dans le présent exemple, le premier fluide 2 comprend les gaz en sortie du ou des compresseurs et le deuxième fluide 3 comprend les gaz d'échappement de la turbomachine 4 au niveau d'une tuyère d'éjection 18. Les gaz d'échappement permettent de réchauffer par exemple le gaz en sortie du ou des compresseurs avant de traverser la chambre de combustion. En effet, la chaleur des gaz d'échappement est de manière générale perdue.

De manière avantageuse, mais non limitativement, le flux secondaire généré par la soufflante circule dans une veine secondaire 19 qui est délimitée radialement par au moins le carter de soufflante 8 et un carter inter-veine 20 entourant le générateur de gaz. Le flux primaire traversant dans le générateur de gaz circule dans une veine primaire 35 qui est délimitée radialement par au moins le carter inter-veine 20 et un carter interne 36 entourant le générateur de gaz.

Le terme « radialement » ou « radial » est défini par rapport à un axe radial Z qui s'étend depuis l'axe longitudinal L de la turbomachine 1 et qui est perpendiculaire à celui-ci.

L'échangeur de chaleur peut être agencé dans la veine secondaire ou alternativement dans la veine primaire. Suivant encore une autre alternative, l'échangeur de chaleur peut être agencé au niveau de la tuyère d'éjection 18. Avantageusement, l'échangeur de chaleur peut être agencé en amont de la chambre de combustion ou en aval de la chambre de combustion.

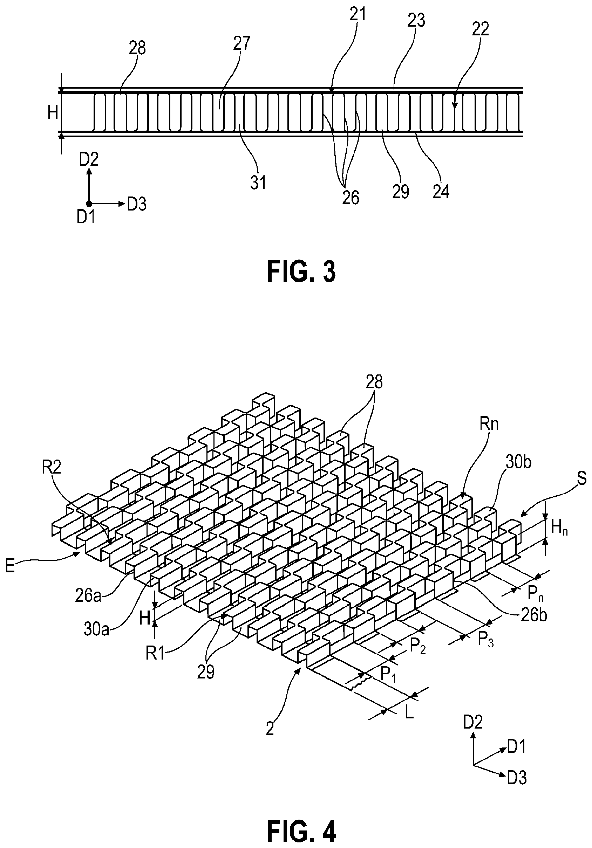

En références aux figures 1 et 3, l'échangeur de chaleur 1 comporte une surface d'échanges primaires 21 et une surface d'échanges secondaire 22. La surface d'échanges primaires 21 comprend deux panneaux (ou plaques) dénommés respectivement un premier panneau 23 et un deuxième panneau 24.

Nous utilisons le terme « direction » pour décrire l'échangeur de chaleur en particulier. En situation d'installation, la première direction D1 est parallèle, à l'axe radial Z de la turbomachine 1.

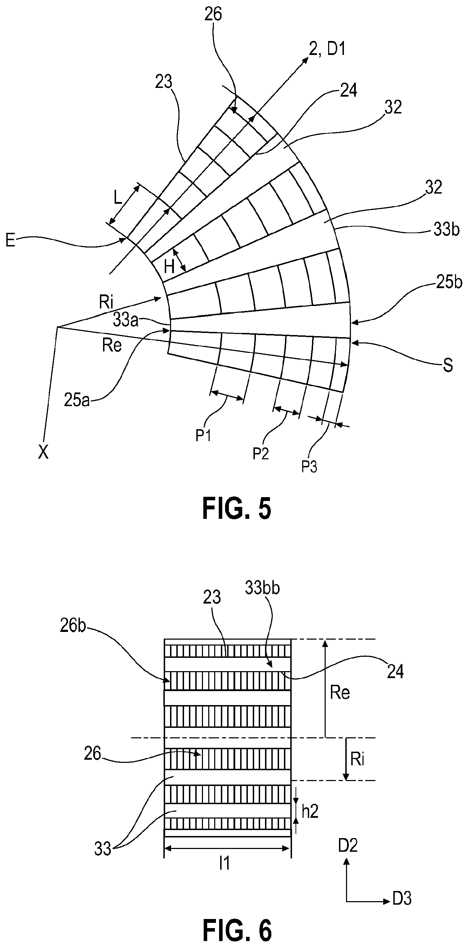

En référence aux figures 1 et 5, l'échangeur de chaleur annulaire et est centré sur une troisième direction longitudinale D3. En situation d'installation, la troisième direction est centrée sur l'axe longitudinal. La forme annulaire de l'échangeur de chaleur 1 permet une meilleure intégration de celui-ci dans la turbomachine 4.

L'échangeur de chaleur 1 présente une surface cylindrique interne 25a définissant un rayon interne Ri et une surface cylindrique externe 25b définissant rayon externe Re. L'échangeur de chaleur 1 présente également une surface amont 37 (ou surface frontale) et une surface aval 38 qui sont opposées suivant l'axe longitudinal. La surface amont 37 et la surface aval 38 sont reliées par les surfaces cylindriques interne et externe 25a, 25b.

L'échangeur de chaleur 1 comprend une entrée E par laquelle le premier fluide entre dans l'échangeur de chaleur 1. De manière avantageuse, l'entrée E est définie au niveau de la surface cylindrique interne 25a. L'échangeur de chaleur 1 comprend également au moins une sortie S par laquelle le premier fluide s'échappe de l'échangeur de chaleur. La sortie S est ici définie au niveau de la surface cylindrique externe 25b.

Dans le cadre de la figure 3 qui montre partiellement les deux panneaux 23, 24, et un étage de l'échangeur de chaleur, ceux-ci sont superposés dans un plan D2, D3. Le deuxième panneau 24 s'étend au-dessus du premier panneau 23 suivant une deuxième direction D2 et à distance de celui-ci de sorte à former un espace 27. La deuxième direction D2 est perpendiculaire à la troisième direction et à une première direction longitudinale D1. La deuxième direction D2 est également parallèle à une direction circonférentielle autour de l'axe longitudinal X de la turbomachine 1.

L'espace 27 formé entre les deux panneaux 23, 24 permet la circulation du premier fluide 2 suivant la première direction D1. Le premier fluide 2 peut circuler entre l'entrée E et la sortie S de l'échangeur de chaleur 1.

L'échangeur de chaleur 1 comprend également une pluralité d'ailettes 26 qui s'étendent entre le premier panneau 23 et le deuxième panneau 24. Les ailettes 26 forment la surface d'échanges secondaires 22. Les ailettes 26 s'étendent transversalement aux premier et deuxième panneaux 23, 24. Plus précisément, les ailettes 26 s'étendent suivant la deuxième direction D2 entre les deux panneaux 23, 24.

Les ailettes 26 forment des canaux 31 dans lesquels circule le premier fluide 2. Le premier fluide 2 est destiné à traverser les ailettes 26 et à s'écouler entre les premier et deuxième panneaux 23, 24 suivant la première direction D1.

La figure 4 représente les ailettes 26 de l'échangeur de chaleur 1 sans les panneaux 23, 24. Les ailettes 26 sont disposées en plusieurs rangées R1, R2, ..., Rn suivant une troisième direction D3. La troisième direction D3 est perpendiculaire aux première et deuxième directions D2, D3. Les rangées d'ailettes 26 sont parallèles les unes aux autres. Dans le cas présent, les rangées R1, R2, Rn d'ailettes 26 sont parallèles à la troisième direction D3.

Chaque ailette 26 a une forme générale plane et s'étend également suivant la première direction D1. De manière avantageuse, chaque ailette 23 présente dans cet exemple une forme générale rectangulaire. Suivant encore une autre alternative, les ailettes 23 présentent une forme trapézoïdale ou toute autre forme ou peuvent encore est inclinée par rapport à la deuxième direction D2.

Les ailettes 26 ont chacune un bord d'attaque 26a et un bord de fuite 26b du premier fluide 2. Les bords d'attaque 26a et bords de fuite 26b sont opposées suivant la première direction D1. Les bords d'attaque 26a et bords de fuite 26b délimitent longitudinalement les ailettes 26. Le bord d'attaque 26a est le bord par lequel le premier fluide 2 entre en contact en premier avec l'ailette 26. Le bord de fuite 26b est le bord avec lequel le premier fluide 2 est en dernier en contact avec l'ailette 26. Les bords d'attaque 26a et bords de fuite 26b s'étendent globalement suivant la deuxième direction.

Comme cela est illustré sur la figure 4, les ailettes 26 sont également disposées en quinconce. Plus précisément, les ailettes 26 sont décalées suivant la troisième direction D3. Avantageusement, les ailettes 26 d'une rangée sur deux se trouvent dans un même plan parallèle au plan D2, D3. Cette disposition permet d'améliorer l'échange thermique par interruption et reformation régulière de la couche limite thermique à la surface des ailettes. La couche limite thermique s'interrompt au bord de fuite de l'ailette et se reforme au bord d'attaque de l'ailette.

De manière avantageuse, mais non limitativement, les ailettes 26 de chaque rangée sont reliées entre elles alternativement par une paroi de sommet 28 et par une paroi de base 29. Les parois de sommet 28 et les parois de base 29 ont une forme générale plane et sont opposées suivant la deuxième direction D2. Les parois de sommet 28 et les parois de base 29 s'étendent suivant la première direction D1. De même, les ailettes 26 des rangées adjacentes suivant la première direction longitudinale sont reliées entre elles par l'intermédiaire des parois de sommet 28. Ces parois de sommet 28 et parois de base 29 présentent une bordure d'attaque 30a reliée aux bords d'attaque 26a des ailettes 26 et une bordure de fuite 30b reliée aux bords de fuite 26b des ailettes 26.

Les ailettes 26 sont fixées aux premier et deuxième panneaux 23, 24. Avantageusement, la fixation est réalisée par l'intermédiaire des parois de sommet 28 et des parois de base 29. La fixation peut être réalisée par soudage ou brasage.

L'échangeur de chaleur 1 peut être présenté sous la forme d'un étage ou de plusieurs étages. Sur la figure 2 est représenté un seul étage. Un étage est défini par les ailettes 26 et par les premiers et deuxièmes panneaux 23, 24. De la sorte, le premier fluide 2 circule à travers les ailettes 26, dans les canaux 31 et dans l'espace 25 entre les deux panneaux 23, 24 tandis que le deuxième fluide 3 circule au-dessus du premier panneau 23 et en dessous du deuxième panneau 24. Dans le cas d'un échangeur de chaleur à plusieurs étages, les étages seraient espacés par des passages 32 dans lesquels est destiné à circuler le deuxième fluide. Chaque passage 32 serait formé entre deux panneaux 23, 24 adjacents d'étages différents.

De manière avantageuse, chaque ailette 26 présente une hauteur H mesurée suivant la deuxième direction D2 et une longueur L mesurée suivant la première direction D1.

De manière avantageuse, la hauteur H des ailettes varie. Cette variation a lieu depuis la surface cylindrique interne 25a jusqu'à la surface cylindrique externe 25b. En d'autres termes, la hauteur va augmenter dans la direction radiale de l'échangeur de chaleur. La hauteur des ailettes varie linéairement avec le rayon de l'échangeur de chaleur (en coordonnées cylindriques). Les parois de sommet 28 des ailettes présentent des surfaces radialement externes qui sont affleurantes. Comme la hauteur varie, la vitesse de l'écoulement diminue et la section de passage augmente. Cela entraîne une diminution du coefficient d'échange.

S'agissant de la longueur L des ailettes 26, celle-ci varie suivant la première direction D1. La longueur L des ailettes varie entre le rayon interne Ri et le rayon externe Re de l'échangeur de chaleur 1. En particulier, la longueur L des ailettes 26 diminue ou décroit de l'entrée E (surface cylindrique interne) de l'échangeur de chaleur à la sortie S (surface cylindrique externe) de l'échangeur de chaleur 1. La variation est continue de manière avantageuse. De la sorte, la vitesse (et donc le coefficient d'échange) varie de manière continue). Cette variation de la longueur de ailettes permet de compenser la diminution du coefficient d'échange. La variation de la longueur des ailettes permet par ailleurs de compenser la variation de section et une variation de vitesse de l'écoulement du premier fluide dans l'échangeur de chaleur. Plus précisément encore, en diminuant la longueur des ailettes on augmente le coefficient d'échange. En effet, il y a plus de bords d'attaque d'ailettes suivant la direction radiale et la couche limite thermique se régénère.

La longueur L de chaque ailette 26 est comprise entre 0.5 mm et 150 mm. De manière avantageuse, la longueur des ailettes proches de l'axe est comprise entre 50 mm et 150 mm et les ailettes éloignées de l'axe longitudinal sont comprises entre 0.5 mm et 50 mm.

Chaque ailette 26 de chaque rangée est située à distance de l'ailette 26 adjacente suivant la première direction D1 et suivant un pas P déterminé. Suivant un autre aspect avantageux, le pas P varie également suivant la première direction D1. Dans le présent exemple, la variation est une décroissance ou une réduction de la distance du pas de l'entrée E de l'échangeur de chaleur 1 vers la sortie S de l'échangeur de chaleur 1. En d'autres termes, le pas P est décroissant le long de l'écoulement du premier fluide 2. La variation du pas P permet de maintenir une résistance thermique convective pour une vitesse de fluide considérée relativement constante. En particulier, cette configuration permet de compenser une augmentation de la longueur des ailettes par la réduction du pas des ailettes suivant la première direction D.

Le pas P entre chaque ailette 26 est compris entre 0.5 mm et 50 mm. De manière avantageuse, le pas P proche de l'axe longitudinal de l'échangeur de chaleur est compris entre 5 mm et 50 mm et le pas éloigné de l'axe longitudinal est compris entre 0.5 mm et 5 mm.

Toujours en référence à la figure 4, le pas transversal (suivant la troisième direction D3) est constant. Le pas transversal est la distance qui sépare chaque rangée d'ailettes.

La figure 5 représente schématiquement et en coupe radiale, un échangeur de chaleur 1 monté dans la turbomachine. L'échangeur de chaleur 1 est annulaire et centré sur l'axe longitudinal X. L'échangeur de chaleur 1 présente plusieurs étages qui sont disposés autour de l'axe longitudinal X. Le motif formé par les ailettes 26 entre deux panneaux 23, 24 est non uniforme. Les premier et deuxième panneaux 23, 24 s'étendent chacune suivant l'axe radial dans la turbomachine. Entre chaque étage est formé le passage 32 destiné à la circulation du deuxième fluide. Chaque passage 32 s'étend entre une extrémité radialement interne 32a et une extrémité radialement externe 32b. L'extrémité radialement interne 31a des passages 32 est disposée sur le rayon interne Ri de l'échangeur de chaleur 1. L'extrémité radialement externe 32b est disposée sur la surface cylindrique externe 25b et le rayon externe Re de l'échangeur de chaleur 1.

La longueur L des ailettes 26 varie suivant la première direction D1 qui est ici parallèle à l'axe radial Z. La longueur L des ailettes 26 augmente suivant la première direction D1 et suivant l'écoulement du premier fluide 2 (soit depuis l'axe central de l'échangeur de chaleur 1 vers la position la plus éloignée du centre). Le pas P décroit de l'entrée de l'échangeur de chaleur vers la sortie de l'échangeur de chaleur 1. Le pas P1, proche du centre de l'échangeur de chaleur, est supérieur au pas P2 lui-même supérieur au pas P3 le plus éloigné du centre de l'échangeur de chaleur (suivant l'axe radial de l'échangeur de chaleur).

Dans le cas de la réduction du pas et l'augmentation de la longueur d'ailettes à mesure que la longueur L de l'ailette augmente, la variation de la longueur de l'ailette peut être définie de manière linéaire en fonction de la coordonnée radiale moyenne de l'ailette avec comme paramètre ${λ}_{r} = \frac{L \left({R}_{min}\right)}{L \left({R}_{max}\right)}$. Dans ce rapport L est la longueur de l'ailette en fonction de sa position radiale en coordonnées cylindriques, Rmin est le rayon minimum de l'échangeur de chaleur définie par la surface cylindrique interne 25a, Rmax est le rayon maximum de l'échangeur de chaleur définie par a surface cylindrique externe 25b. Par exemple, le paramètre λᵣ peut être compris entre 1.2 et 1.8. Ce paramètre géométrique λᵣ est un rapport entre la longueur des ailettes au niveau de l'entrée (surface cylindrique interne) et la longueur des ailettes au niveau de la sortie (surface cylindrique externe).

De manière alternative, mais non limitativement, les ailettes sont 26 ondulées et à pas décalés. Lorsque les ailettes sont ondulées, la réduction du pas P de l'ondulation à mesure que la longueur d'ailette augmente permet de compenser la réduction de la compacité de l'échangeur de chaleur par l'augmentation du coefficient d'échange. Par exemple la périodicité longitudinale *Pₗ* peut diminuer de façon linéaire en fonction de la coordonnée radiale avec comme paramètre de réduction ${λ}_{pl} = \frac{{P}_{l} \left({R}_{min}\right)}{{P}_{l} \left({R}_{max}\right)}$ où *Pₗ* est la périodicité longitudinale de l'ondulation de l'ailette en fonction de sa position radiale en coordonnées cylindriques. Nous avons par exemple, 1.2 < λₚₗ < 1.8. La périodicité longitudinale correspond à la longueur d'une ailette suivie d'un pas. Il s'agit de la manière dont le motif se répète suivant la première direction D1.

De manière avantageuse, la section d'entrée de l'échangeur de chaleur est inférieure à la section de sortie de l'échangeur de chaleur. La section augmente de façon linéaire en s'éloignant de l'axe de révolution de l'échangeur de chaleur. Avantageusement, plus la section de passage augmente et plus la vitesse du premier fluide 2 diminue.

La figure 6 représente une vue schématique et de côté de l'échangeur de chaleur 1. Sur cette figure est représentée la sortie S de l'échangeur de chaleur 1 par laquelle débouche le premier fluide 2. Sur cette vue sont visibles les bords de fuite 26b des ailettes 26. Nous pouvons voir également des couvercles 33b qui sont installés avantageusement de part et d'autre des ailettes 26 suivant la deuxième direction D2. Ces couvercles 33b sont destinés à obturer au moins en partie les passages 32 dans lesquels circule le deuxième fluide 2. Plus précisément, chaque couvercle 33b est disposé à une extrémité d'un passage 31 pour obturer ladite extrémité et le passage 32 à cet endroit. Dans le présent exemple, les couvercles 33b sont disposés au niveau de l'extrémité radialement externe 31b des passages 32. Chaque couvercle 33b comprend une surface externe 33bb qui forme la surface cylindrique externe 25b.

De manière avantageuse et en référence à la figure 5, des couvercles 33a sont également agencés au niveau de l'extrémité radialement interne 31a des passages 31. Chaque couvercle 33a comprend une surface externe 33aa (cf. figure 1) qui forme la surface cylindrique externe 25b.

De la sorte, le deuxième fluide 3 qui pénètre dans l'échangeur de chaleur 1 au niveau de l'extrémité radialement interne 31a est guidé entre les deux couvercles 33a, 33b vers une autre sortie. Le premier flux et le deuxième flux ne peuvent ainsi se mélanger.

Suivant une autre alternative, le deuxième fluide 3 peut circuler dans l'échangeur de chaleur 1 axialement (suivant l'axe longitudinal) ou radialement (suivant l'axe radial).

Chaque couvercle 33a, 33b présente une largeur l1 identique à celle des premier et deuxième panneaux 23, 24. La largeur l1 est mesurée suivant la troisième direction D3. Chaque couvercle 33a, 33b présente également une hauteur h2 mesurée entre deux panneaux 23, 24. La surface radialement externe du couvercle 33b délimite le rayon externe de l'échangeur de chaleur 1 tandis que la surface radialement interne du couvercle 33a délimite également le rayon interne de l'échangeur de chaleur 1.

De manière avantageuse, les ailettes 26, les parois de sommet 28 et les premier et deuxième panneaux 23, 24 sont formées d'une seule pièce (venues de matière ou monobloc). De manière avantageuse, celles-ci sont obtenues par un procédé de fabrication additive et notamment fusion sélective sur lits de poudre connu sous l'acronyme anglais SLM pour « Selective Laser Melting ». Ce procédé est particulièrement adapté pour la réalisation de l'échangeur de chaleur en une seule pièce. En particulier, le procédé permet d'obtenir des formes complexes et des pièces de bonnes résistances et caractéristiques mécaniques. Le principe de la fabrication additive SLM se base sur la fusion de fines couches en deux dimensions (2D) de poudre, par exemple métallique, plastique, ou céramique, à l'aide d'un laser de forte puissance.

Dans le cadre de ce procédé de fabrication additive, l'échangeur de chaleur est dépourvu des parois de sommet 28 et des parois de base 29. Le procédé permet en effet une liaison directe des ailettes et des premier et deuxième panneaux 23, 24. Ainsi, la fabrication additive et l'absence de ces parois permet un gain de poids.

La fabrication additive est réalisée à partir d'une installation SLM qui comprend de manière générale un réservoir d'alimentation contenant une poudre et un support de fabrication sur lequel est réalisée la pièce à fabriquer, en l'occurrence l'échangeur de chaleur 1. L'installation comprend également un élément de balayage permettant de transférer une quantité de la poudre du réservoir d'alimentation sur le support de fabrication qui est monté de manière mobile suivant une translation verticale Z. L'installation comprend également un élément de génération d'un faisceau laser permettant de fondre la poudre destinée à réaliser la pièce et des moyens permettant d'orienter le faisceau laser vers le support tels que des miroirs. Un réservoir de recyclage permet de recycler la poudre non utilisée ou non fusionnée.

Le procédé consiste à fabriquer la pièce en superposant des couches de poudre issues du réservoir d'alimentation et transférées sur le support de fabrication. Ces couches de poudre sont ensuite fondues les unes après les autres au moyen du faisceau laser se déplaçant sur la surface de chaque couche. La température de la poudre est portée à une température supérieure à la température supérieure à la température de fusion de la poudre via le faisceau laser. Les couches fondues se solidifient au fur et à mesure et forment un bloc d'un seul tenant.

De manière avantageuse, les différentes couches destinées à former l'échangeur de chaleur sont superposées suivant un axe de fabrication qui est parallèle à la troisième direction D3.

## Revendications

1. Echangeur de chaleur (1) pour une turbomachine (4), notamment d'aéronef, d'axe longitudinal (X), l'échangeur de chaleur (1), annulaire, comprenant une pluralité d'ailettes destinées à être balayées par un premier fluide (2) suivant une première direction (D1), les ailettes s'étendant suivant une deuxième direction (D2) entre un premier panneau (23) et un deuxième panneau (24), les ailettes (26) étant disposées en plusieurs rangées (R1, R2, Rn) suivant une troisième direction (D3), chaque rangée (R1, R2, Rn) d'ailettes (26) étant parallèles les unes autres et connectées les unes aux autres, **caractérisé en ce que** les ailettes (26) sont disposées en quinconce et **en ce que** l'échangeur de chaleur (1) est centré sur la troisième direction et présente une surface cylindrique interne (25a) définissant une entrée (E) de l'échangeur de chaleur (1) et une surface cylindrique externe (25b) définissant une sortie (S) de l'échangeur de chaleur (1), et **en ce que** les ailettes (26) présentent une longueur (L) qui décroit radialement dans l'échangeur de chaleur, suivant la première direction (D1), entre la surface cylindrique interne (25a) et la surface cylindrique externe (25b).

2. Echangeur de chaleur (1) selon la revendication précédente, **caractérisé en ce que** les ailettes (26) de chaque rangée sont espacées d'un pas (P) suivant la première direction (D1), le pas (P) présentant une variation suivant la deuxième direction (D2).

3. Echangeur de chaleur (1) selon la revendication précédente, **caractérisé en ce que** le pas (P) décroit suivant la première direction de la surface cylindrique interne (25a) vers la surface cylindrique externe (25b).

4. Echangeur de chaleur (1) selon l'une quelconque des revendications précédentes, **caractérisé en ce que** chaque ailette (26) présente une hauteur (H) qui croit depuis la surface cylindrique interne (25a) à la surface cylindrique externe (25b).

5. Echangeur de chaleur (1) selon l'une quelconque des revendications précédentes, **caractérisé en ce que** le premier panneau (23), le deuxième panneau (24) et les ailettes (26) entre les premiers et deuxième panneaux (23, 24) forment un étage et **en ce que** l'échangeur de chaleur (1) comprend plusieurs étages disposés autour de la troisième direction (D3), les étages étant espacés par des passages (32) destinés à la circulation d'un deuxième fluide (3).

6. Echangeur de chaleur (1) selon la revendication précédente, **caractérisé en ce qu'**il comprend des couvercles (33a, 33b) obturant chacun une extrémité d'un passage (32), les couvercles (33a, 33b) s'étendant entre le premier panneau (23) et le deuxième panneau (24).

7. Echangeur de chaleur (1) selon l'une quelconque des revendications précédentes, **caractérisé en ce que** les ailettes (26) sont reliées alternativement par des parois de sommet (28) et des parois de base (29), les parois de sommet (28) et les parois de base (29) étant reliées respectivement aux premier et deuxième panneaux (23, 24).

8. Echangeur de chaleur (1) selon l'une quelconque des revendications 1 à 6, **caractérisé en ce qu'**il est réalisé en une seule pièce.

9. Turbomachine d'axe longitudinal X comprenant un échangeur de chaleur (1) selon l'une quelconque des revendications précédentes, les premier et deuxième panneaux (23, 24) s'étendant d'une part, suivant un axe radial perpendiculaire à l'axe longitudinal X et étant d'autre part, disposés régulièrement autour de l'axe longitudinal, les ailettes (26) étant disposées entre les premier et deuxième panneaux (23, 24), la première direction (D1) parallèle à l'axe radial (Z).

10. Procédé de fabrication d'un échangeur de chaleur (1) selon l'une quelconque des revendications 1 à 6 et 8, **caractérisé en ce que** le procédé comprend une étape de réalisation de l'échangeur de chaleur par fabrication additive par fusion sélective sur lits de poudre.

## Patentansprüche

1. Wärmetauscher (1) für ein Turbotriebwerk(4), insbesondere eines Luftfahrzeugs, mit einer Längsachse (X), wobei der ringförmige Wärmetauscher (1) eine Vielzahl von Rippen umfasst, die dazu bestimmt sind, von einem ersten Fluid (2) umströmt zu werden, das einer ersten Richtung (D1) folgt, wobei sich die Rippen entlang einer zweiten Richtung (D2) zwischen einer ersten Platte (23) und einer zweiten Platte (24) erstrecken, wobei die Rippen (26) in mehreren Reihen (R1, R2, Rn) entlang einer dritten Richtung (D3) angeordnet sind, wobei jede Reihe (R1, R2, Rn) an Rippen (26) parallel zueinander sind und miteinander verbunden sind, **dadurch gekennzeichnet, dass** die Rippen (26) gegeneinander versetzt angeordnet sind und dass der Wärmetauscher (1) in der dritten Richtung zentriert ist, und eine zylindrische Innenoberfläche (25a) aufweist, die einen Eingang (E) des Wärmetauschers (1) definiert, und eine zylindrische Außenoberfläche (25b), die einen Ausgang (S) des Wärmetauschers (1) definiert, **dadurch gekennzeichnet, dass** die Rippen (26) eine Länge (L) aufweisen, die radial im Wärmetauscher entlang der ersten Richtung (D1) zwischen der zylindrischen Innenoberfläche (25a) und der zylindrischen Außenoberfläche (25b) abnimmt.

2. Wärmetauscher (1) nach dem vorstehenden Anspruch, **dadurch gekennzeichnet, dass** die Rippen (26) einer jeden Reihe um eine Teilung (P) entlang der ersten Richtung (D1) beabstandet sind, wobei die Teilung (P) eine Variation entlang der zweiten Richtung (D2) aufweist.

3. Wärmetauscher (1) nach dem vorstehenden Anspruch, **dadurch gekennzeichnet, dass** die Teilung (P) entlang der ersten Richtung der zylindrischen Innenoberfläche (25a) zur zylindrischen Außenoberfläche (25b) abnimmt.

4. Wärmetauscher (1) nach einem der vorstehenden Ansprüche, **dadurch gekennzeichnet, dass** jede Rippe (26) eine Höhe (H) aufweist, die von der zylindrischen Innenoberfläche (25a) zur zylindrischen Außenoberfläche (25b) zunimmt.

5. Wärmetauscher (1) nach einem der vorstehenden Ansprüche, **dadurch gekennzeichnet, dass** die erste Platte (23), die zweite Platte (24) und die Rippen (26) zwischen der ersten und zweiten Platte (23, 24) eine Stufe bilden, und dadurch, dass der Wärmetauscher (1) mehrere Stufen umfasst, die um die dritte Richtung (D3) herum angeordnet sind, wobei die Stufen durch Durchlässe (32) beabstandet sind, die zur Zirkulation eines zweiten Fluids (3) bestimmt sind.

6. Wärmetauscher (1) nach dem vorstehenden Anspruch, **dadurch gekennzeichnet, dass** er Deckel (33a, 33b) umfasst, die jeweils ein Ende eines Durchlasses (32) bedecken, wobei sich die Deckel (33a, 33b) zwischen der ersten Platte (23) und der zweiten Platte (24) erstrecken.

7. Wärmetauscher (1) nach einem der vorstehenden Ansprüche, **dadurch gekennzeichnet, dass** die Rippen (26) abwechselnd durch obere Wände (28) und untere Wände (29) verbunden sind, wobei die oberen Wände (28) und die unteren Wände (29) jeweils mit der ersten und zweiten Platte (23, 24) verbunden sind.

8. Wärmetauscher (1) nach einem der Ansprüche 1 bis 6, **dadurch gekennzeichnet, dass** er in einem Stück hergestellt ist.

9. Turbotriebwerk mit einer Längsachse X, umfassend einen Wärmetauscher (1) nach einem der vorstehenden Ansprüche, wobei sich die erste und zweite Platte (23, 24) einerseits entlang einer radialen Achse senkrecht zur Achse X erstrecken, und andererseits gleichmäßig um die Längsachse herum angeordnet sind, wobei die Rippen (26) zwischen der ersten und zweiten Platte (23, 24) in der ersten Richtung (D1) parallel zur radialen Achse (Z) angeordnet sind.

10. Verfahren zur Herstellung eines Wärmetauschers (1) nach einem der Ansprüche 1 bis 6 und 8, **dadurch gekennzeichnet, dass** das Verfahren einen Schritt zum Ausführen des Wärmetauschers durch additive Fertigung durch selektive Pulverbett-Fusion umfasst.

## Claims

1. A heat exchanger (1) for a turbomachine (4), in particular an aircraft turbomachine, having a longitudinal axis (X), the, annular, heat exchanger (1) comprising a plurality of fins configured to be swept by a first fluid (2) in a first direction (D1), the fins extending in a second direction (D2) between a first panel (23) and a second panel (24), the fins (26) being arranged in a plurality of rows (R1, R2, Rn) in a third direction (D3), each row (R1, R2, Rn) of fins (26) being parallel to one another and connected to one another, **characterised in that** the fins (216) are staggered and **in that** the heat exchanger (1) is centered on the third direction and has an inner cylindrical surface (25a) defining an inlet (E) to the heat exchanger (1) and an outer cylindrical surface (25b) defining an outlet (S) from the heat exchanger (1), and **in that** the fins (26) have a length (L) which decreases radially in the heat exchanger, in the first direction (D1), between the inner cylindrical surface (25a) and the outer cylindrical surface (25b).

2. The heat exchanger (1) according to the preceding claim, **characterised in that** the fins (26) of each row are spaced apart by a pitch (P) in the first direction (D1), the pitch (P) having a variation in the second direction (D2).

3. The heat exchanger (1) according to the preceding claim, **characterised in that** the pitch (P) decreases in the first direction from the inner cylindrical surface (25a) towards the outer cylindrical surface (25b).

4. The heat exchanger (1) according to any one of the preceding claims, **characterised in that** each fin (26) has a height (H) which increases from the inner cylindrical surface (25a) to the outer cylindrical surface (25b).

5. The heat exchanger (1) according to any one of the preceding claims, **characterised in that** the first panel (23), the second panel (24) and the fins (26) between the first and second panels (23, 24) form a stage and **in that** the heat exchanger (1) comprises several stages arranged around the third direction (D3), the stages being spaced apart by passages (32) configured for the circulation of a second fluid (3).

6. The heat exchanger (1) according to the preceding claim, **characterised in that** it comprises covers (33a, 33b) each closing one end of a passage (32), the covers (33a, 33b) extending between the first panel (23) and the second panel (24).

7. The heat exchanger (1) according to any one of the preceding claims, **characterised in that** the fins (26) are connected alternately by top walls (28) and base walls (29), the top walls (28) and the base walls (29) being connected respectively to the first and second panels (23, 24).

8. The heat exchanger (1) according to any one of claims 1 to 6, **characterised in that** it is formed in one-part.

9. A turbomachine of longitudinal axis X comprising a heat exchanger (1) according to any one of the preceding claims, the first and second panels (23, 24) extending, on the one hand, along a radial axis perpendicular to the longitudinal axis X and being, on the other hand, arranged regularly around the longitudinal axis, the fins (26) being arranged between the first and second panels (23, 24), the first direction (D1) parallel to the radial axis (Z).

10. A method for manufacturing a heat exchanger (1) according to any one of claims 1 to 6 and 8, **characterised in that** the method comprises a step of producing the heat exchanger by additive manufacturing using selective melting on powder beds.
